# NEW EUROPEAN PATENT SPECIFICATION

(11) **EP 2 255 172 B2**
(45) Date of publication and mention of the opposition decision: **23.01.2019**
(45) Mention of the grant of the patent: 10.06.2015
(21) Application number: 08731172.6
(22) Date of filing: 29.02.2008
(51) Int. Cl.: G01N 21/03, G01N 21/01, G01N 21/27

(54) **METHOD OF VALIDATING A VERTICAL LIGHT BEAM SPECTROPHOTOMETER**
VERFAHREN ZUR VALIDIERUNG EINES SPEKTROPHOTOMETERS MIT VERTIKALEM LICHTSTRAHL
PROCÉDÉ POUR VALIDER UN SPECTROPHOTOMÈTRE À FAISCEAU LUMINEUX VERTICAL

(43) Date of publication of application: 01.12.2010
(73) Proprietor: Starna Cells, Inc., Atascadero, CA 93423 (US)
(72) Inventor: WEBSTER, John, Russell, Atascadero CA 93422 (US); HULME, Alan, Keith, Essex, Hainault 1G6 3UT (GB)
(74) Representative: JENSEN & SON
(86) International application number: PCT/US2008/055561
(87) International publication number: WO 2009/108207

(56) References cited:
- GB-A- 1 486 210
- US-A- 4 652 137
- US-A- 5 048 957
- US-A- 5 216 488
- US-A- 5 567 617
- US-A- 5 774 209
- US-A1- 2002 155 619
- US-A1- 2003 107 738
- US-A1- 2005 168 737
- US-B1- 6 198 536
- US-B1- 6 339 472
- US-B1- 6 340 589
- US-B2- 7 061 608
- CARY ECLIPSE USER GUIDE, MAY 2000

## Description

### FIELD OF THE INVENTION

This invention relates to a method for validating a vertical light beam spectrophotometer.

### BACKGROUND OF THE INVENTION

Spectrophotometers are laboratory tools for analyzing or testing liquid samples of, for example, chemical solutions or mixtures, biologic materials, biochemical materials, biochemical reactions, and the like. Typically, two types of spectrophotometers are available: the vertical light beam spectrophotometer, in which the analyzing light beam is transmitted in the vertical direction through a sample disposed in a horizontal plane; and the horizontal light beam spectrophotometer, in which the analyzing beam is transmitted in the horizontal direction through a sample disposed in a vertical plane.

Most conventional spectrophotometers employ a horizontal light beam that traverses the liquid sample horizontally so as to avoid passing through the liquid-gas interface that is typically above the sample. With such horizontal light beam photometers, the geometry and optical pathlength within the sample is fixed for any given cuvette. For visible and ultraviolet light absorption measurements, for example, cuvettes customarily have a 1 cm pathlength. Cuvettes with pathlengths between 0.1 cm and 10 cm are also common, however.

Vertical light beam spectrophotometers also measure light absorption. In vertical light beam spectrophotometers, however, the light beam typically passes only through one wall of the sample-retaining device, through the sample, and through the interface between the sample a surrounding gas atmosphere (which is usually air).

The latter liquid-gas interface, the meniscus, is usually curved. The specific shape of the meniscus depends upon the interactions between the liquid sample and the gas and the sidewalls of the sample-retaining device. Depending upon the design of a particular vertical light beam spectrophotometer, the light beam may traverse the meniscus either before or after passing through the sample. In either case, the optical pathlength through the sample is not a constant value. Instead, the optical pathlength is related to the sample volume and the meniscus shape. The nature of the sample, the sample-retaining device surfaces, and the gas each contributes to the shape of the meniscus, quantitatively affecting the optical pathlength through the sample.

Vertical light beam spectrophotometry has become a popular technique, despite the disadvantage of not having a fixed optical pathlength through the sample. This popularity stems from the fact that the optical characteristics of multiple samples may be analyzed with a vertical-beam photometer in a small period of time. Typically, vertical light beam spectrophotometers monitor the optical characteristics of samples disposed in the wells of, for example, 96-well multi-assay plates. The optical characteristics, such as light absorption or light scattering, of the samples contained within each well of such multi-assay plates may be monitored in a few seconds. Vertical light beam spectrophotometers also allow repetitive measurements of multiple samples to be made with short intervals between each of a series of measurements.

The use of vertical light beam spectrophotometers in clinical assays is therefore important. These vertical light beam spectrophotometers are calibrated, and the calibrations are verified by the manufacturer. However, it is both necessary and good practice to routinely validate the performance of these instruments in the course of clinical practice, and may in fact be required by regulatory agencies overseeing such practice.

There exists a number of U.S. patents directed to verifying the calibration of vertical light beam spectrophotometers, including U.S. Patent No. 5,258,308 issued to Freeman, et. al., entitled "Method, kit and apparatus for verifying calibration and linearity of vertical photometers," ("Freeman"). Freeman describes a method and means of verifying the calibration of vertical light beam spectrophotometers comprising predispensed dye check strips which provide reproducible standards by which the functioning of the spectrophotometer can be ascertained. Each strip contains a plurality of microtiter wells containing a dried dye material which when reconstituted can be read in the various models of photometers and spectrophotometers to assess instrument performance.

U.S. Patent No. 5,963,318 issued to Held, entitled "Method of and apparatus for performing fixed pathlength vertical photometry," ("Held") describes a system for performing vertical light beam spectrophotometric determinations using a vessel which has an upper transparent surface and a lower transparent surface which are spaced apart to define a known fixed pathlength through which a light beam is transmitted. The vessel also includes a portion disposed above the upper surface which may be a spout having an opening for allowing the introduction of substances into the containment portion.

Like Held, U.S. Patent No. 6,074,614 issued to Hafeman, et. al., entitled "Multiassay plate cover for elimination of meniscus," ("Hafeman") also describes a vessel having a constant pathlength, where the vessel comprises a flat top side and a flat bottom side, the bottom side having solid cylindrical projections of equal length extending downwardly from the flat bottom side, wherein each cylindrical projection is centered about the optical axis passing through a corresponding sample well of a multi-assay plate, thereby eliminating meniscus and evaporation effects.

Freeman, Held, and Hafeman each describe a specialized vessel designed exclusively for calibrating and validating a vertical light beam spectrophotometer. They illustrate how a user is limited to *specialized* cuvettes when using a vertical light beam spectrophotometer. Accordingly, there is a need in the art for a device and method for using, calibrating, and validating a vertical light beam spectrophotometer using conventional cuvettes.

Others have attempted to validate vertical light beam spectrophotometers with conventional cuvettes in the past. For example, as discussed in US 2005/0168737 A1 to Bradshaw, et. al., one method for calibrating vertical light beam spectrophotometers involves the testing of reference cuvettes having samples of reference concentrations. Solutions containing different concentrations of the specific dye are first sealed in conventional cuvette. Such "reference samples" or "reference solutions" typically have a known or expected absorbance measurement for comparison by a user to a measurement obtained from the spectrophotometer to be validated. However, this general method has limitations that constrain its usefulness. Bradshaw, et. al. points out that sealed cuvettes require an expansion allowance zone including a compressible component that may be a bubble of gas (such as air) to allow for the solution to expand/contract due to thermal fluctuations. This compressible component must be held out of the light beam path when such cuvettes are placed horizontally in a vertical light beam spectrometer, or it will adversely affect the absorbance values measured. Bradshaw, et. al. discloses an enclosed calibration plate including one or more sealed reference cuvettes having specialized bubble traps used to hold the compressible component in place in the expansion allowance zone, out of the beam path near the top of the cuvette. However, an easy to use system that does not require the use of specialized cuvettes having, *e.g*., bubble traps is still needed.

Accordingly, the present disclosure relates to an adaptor plate to allow the use of conventional spectrophotometer cuvettes with a vertical light beam spectrophotometer without the need for specialized cuvettes, or bubble traps, as discussed above.

### SUMMARY OF THE INVENTION

The disclosure relates, in one form thereof, to an apparatus for use in a vertical light beam spectrophotometer comprising: a plate having a top face, a bottom face, and one or more openings for passage of light through the plate; wherein at least a portion of the top face is configured such that an end of at least one cuvette aligned over one or more of the openings in the top face is propped in a vertical direction relative to the opposite end of the cuvette. In some examples, this apparatus can replace a conventional cuvette support that is normally used with the spectrophotometer.

More particularly, the disclosure relates to an apparatus for use in a vertical light beam spectrophotometer comprising: a plate having a top face, a bottom face, and one or more openings for passage of light through the plate; wherein at least a portion of the top face is configured such that a first end of at least one cuvette is aligned over one or more of the openings in the top face by one or more aligning walls, and a second end of the at least one cuvette is propped in a vertical direction relative to the first end of the cuvette by a raised element.

In another form, the disclosure relates to a method for adapting conventional cuvettes for use in a vertical light beam spectrophotometer. The method comprises the steps of: providing at least one cuvette with a first end and a second end opposite the first end; providing an adaptor plate having: (a) a top face, (b) a bottom face, and (c) one or more openings for passage of light through the plate, wherein at least a portion of the top face is configured such that the first end of at least one cuvette is propped in a vertical direction relative to the opposite end of the cuvette; aligning the cuvette over the one or more openings, such that light passes through the cuvette; and using the vertical spectrophotometer to obtain a reading for a sample in the cuvette.

In another form, the present relates to the use of reference cuvettes traditionally used in horizontal light beam spectrophotometers in vertical light beam spectrophotometers. One anticipated commercial advantage of the invention is that a customer can use the same reference cells in both horizontal and vertical light beam spectrophotometers using only the present invention. The customer thus saves the cost of purchasing additional reference cells specially designed for vertical light beam spectrophotometers.

The present invention is directed to a method of calibrating or validating a vertical light beam spectrophotometer as defined by the appended claims.

According to a first aspect of the present disclosure there is provided an apparatus for use with cuvettes in a vertical light beam spectrophotometer comprising: a plate having a top face, a bottom face, and one or more openings for passage of light through the plate; wherein at least a portion of the top face is configured such that an end of at least one cuvette aligned over one or more of the openings in the top face is propped in a vertical direction relative to the opposite end of the cuvette.

According to a second aspect of the present disclosure there is provided an apparatus for use with cuvettes in a vertical light beam spectrophotometer comprising: a plate having a top face, a bottom face, and one or more openings for passage of light through the plate; wherein at least a portion of the top face is configured such that a first end of at least one cuvette is alignable over one or more of the openings in the top face by one or more aligning walls, and a second end of the at least one cuvette is propped in a vertical direction relative to the first end of the cuvette by a raised element.

According to a third aspect of the present disclosure there is provided an apparatus for use with cuvettes in a vertical light beam spectrophotometer comprising: a generally rectangular plate having one or more openings for passage of light through the plate; a means for propping an end of at least one cuvette in a vertical direction relative to the opposite end of the cuvette; and a means for aligning the cuvette over the one or more openings.

According to a fourth aspect of the present disclosure there is provided a method for using an adaptor plate in a vertical light beam spectrophotometer, said method comprising the steps of: providing at least one cuvette with a first end and a second end opposite the first end; providing an adaptor plate having: (a) a top face, (b) a bottom face, and (c) one or more openings for passage of light through the plate, wherein at least a portion of the top face is configured such that the first end of at least one cuvette is propped in a vertical direction relative to the opposite end of the cuvette; aligning the cuvette over the one or more openings, such that light passes through the cuvette; and using the vertical spectrophotometer to obtain a reading for a sample in the cuvette.

Preferably, the step of determining whether the vertical light beam spectrometer is performing within acceptable tolerance limits by comparing the reading with the reference sample's known measurement value further comprises the step of determining that the vertical spectrophotometer is not performing within acceptable tolerance limits.

According to a sixth aspect of the present disclosure there is provided a vertical light beam spectrophotometer system, comprising: a vertical light beam spectrophotometer; and an adaptor plate for use with cuvettes in the vertical light beam spectrophotometer, wherein the adaptor plate has a top face, a bottom face, and one or more openings for passage of light from the vertical light beam spectrometer vertically through the plate; and wherein at least a portion of the top face is configured such that an end of at least one cuvette aligned over one or more of the openings in the top face is propped in a vertical direction relative to the opposite end of the cuvette.

Preferably, the apparatus comprises one or more aligning walls for aligning one or more surfaces of a cuvette disposed on the top face, such that the aligning walls align at least one cuvette in a position over at least one of the openings for passage of light through the plate. More preferably, at least two aligning walls, wherein the distance from an outer surface of a first aligning wall to an outer surface of a second aligning wall is approximately equal to or greater than the width of the cuvette.

In a preferred example, the one or more openings for allowing the passage of light through the plate are disposed in a pattern substantially consistent with any of ANSI SBS 1, 2, 3, 4-2004 standards for vertical light beam spectrophotometers.

Preferably, the plate further includes a longitudinal edge and a latitudinal edge and the raised element for propping the end of the cuvette is disposed on the plate in a direction generally parallel to the latitudinal edge of the plate.

In a preferred example, the top face includes two or more raised elements for propping ends of two or more cuvettes.

In another preferred example, the top face has a generally planar surface and the raised element has a height of about 0.5 to 2 mm above the generally planar surface of the top face.

In a further preferred example, the top face, bottom face, a raised element for propping at least one cuvette in a vertical direction relative to the opposite end of the cuvette, and two or more aligning walls are made of a one-piece, unitary construction.

In another preferred example, the apparatus further includes a top plate, joinable to the top face of the plate referred to above, wherein the top plate has one or more openings alignable with the one or more openings of the plate referred to above for passage of light through the top plate and the plate of referred to above, further wherein the top plate has portions configured to align at least one cuvette over the one or more openings of the plate of referred to above.

Preferably, the propping means is operable to prop the end of the cuvette 1 to 4 degrees relative to the opposite end of the cuvette and more preferably, about 3 degrees.

In a preferred example, the propping means prop end of the cuvette a vertical distance between 0.5 to 2 mm relative to a generally planar surface of a top face of the generally rectangular plate.

In a preferred example, the plate is opaque. Preferably, at least a portion of the top face is an inclined surface. More preferably, the top face includes a raised element for propping at least one cuvette in a vertical direction relative to the opposite end of the cuvette and the raised element is removable. Even more preferably, the raised element props an end of at least one cuvette in a vertical direction relative to the opposite end of the cuvette.

### BRIEF DESCRIPTION OF THE DRAWINGS

The present invention is disclosed with reference to the accompanying drawings, wherein:
Fig. 1 is an illustrative view of exemplary conventional cuvettes;
Fig. 2 is a view of a first example of the adaptor plate used in the present invention;
Fig. 3 is an exploded view of the example of the adaptor plate shown in FIG. 2;
Fig. 4 is a close-up, cut-away view of the example of the adaptor plate used in the present invention as shown in FIG. 2, including a cuvette;
Fig. 5 a top view of a second example of the adaptor plate used in the present invention,;
Fig. 6 is a top view of a third example of the adaptor plate used in the present invention; and
Fig. 7 is a side view of a cuvette disposed on a raised element of one example of the adaptor plate used in the present invention, illustrating an exemplary degree of vertical clearance.

Corresponding reference characters indicate corresponding parts throughout the several views. The examples set out herein illustrate several embodiments of the invention but should not be construed as limiting the scope of the invention as defined by the appended claims.

### DETAILED DESCRIPTION

In short, the typical sequence of events in a spectrophotometer analysis is as follows: (1) a sample (held in a cuvette) is disposed in the spectrophotometer; (2) a light source shines through the cuvette and sample, and the sample absorbs light; (3) a detector detects how much light the sample has absorbed; (4) the detector then converts how much light the sample absorbed into a number or signal; and (6) the number or signal is displayed, plotted or transmitted to a computer to be further manipulated (e.g. curve smoothing, baseline correction, comparison to a reference, etc.). Herein, the number or signal is referred to as a reading or measurement.

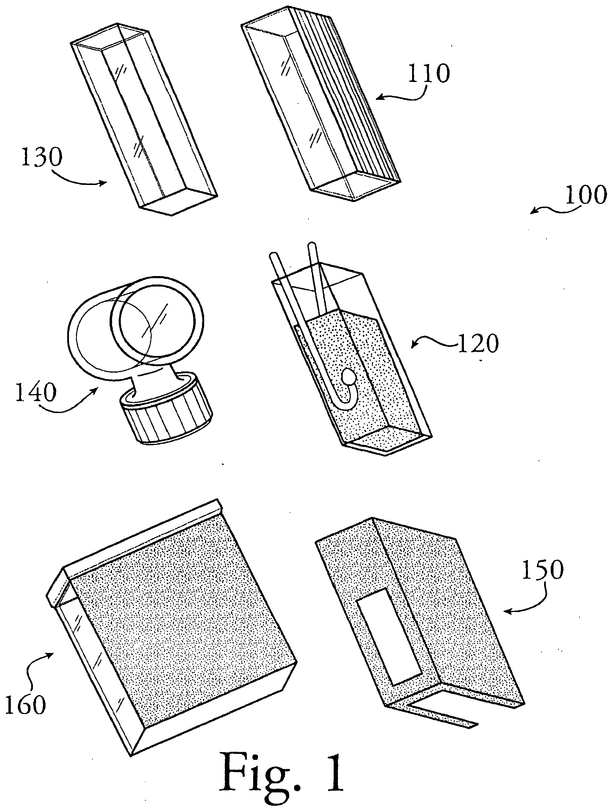

FIG. 1 shows illustrations of a variety of conventional cuvettes 100; cuvettes are also referred to herein as spectrophotometer cells or simply as cells. Typically, cuvettes as shown in FIG. 1 are used in connection with horizontal light beam spectrophotometers. A cuvette is a kind of laboratory glassware, usually a small tube of circular or square cross-section made of plastic, glass, or optical grade quartz, and designed to hold samples for spectroscopic experiments, and may be sealed on at least one end. Disposable plastic cuvettes, while not as optically clear as glass or quartz versions, are often used in fast spectroscopic assays, where speed is more important than high accuracy. Typically, the best cuvettes are as clear as possible, without impurities that might affect a spectroscopic reading. Like a test tube, a cuvette may be open to the atmosphere on top or have a glass or plastic cap to seal it shut. Parafilm or the like can also be used to seal a cuvette. Reference cuvettes may be permanently heat sealed. Conventional cuvettes are round, square, or rectangular, and may look similar to test tubes. Typically, cuvettes are about one centimeter across, to allow for easy calculations of co-efficients of absorption. The cuvettes are used for holding samples to be measured for absorbance or transmission in common spectrophotometers. As known to those skilled in the art, there are accepted international standards for the size, shape and materials for the construction of cuvettes.

Some cuvettes 110 will be clear only on opposite sides, so that they pass a single beam of light through that pair of sides; often the unclear sides have ridges or are rough to allow easy handling. Cuvettes to be used in fluorescence spectroscopy are typically clear on all four sides. Some cuvettes, known as tandem cuvettes, have a glass barrier that extends approximately two-thirds up inside the cuvette, so that measurements can be taken with two solutions separated, and again when they are mixed. Flow cells 120 are frequently used for measuring samples with continuous flow as in chromatography or on-line production monitoring such as tablet dissolution. They may also be used in sipper systems where individual samples are aspirated into and out of the cell either by a syringe or pumping system. A wide variety of flow cell designs are available because different applications require the optimization of sample availability, by sample volume constraints; beam geometry; flow characteristics and path length. Instruments also have differing tube connection requirements relating to the pumping system used.

Examples of other conventional cuvette types include: cylindrical 140; glass or quartz filters 150; wide 160; semi-micro; micro; sub-micro; screw cap; flow through; micro flow; water jacketed: fluid filled reference; anaerobic thumbert; tandem; demountable; cryogenic; quartz to pyrex graded seal; etc.

Rectangular cells 130 are used for most routine analyses. By far the most common type of cell, they have at least two clear windows and conform to international standard dimensions. Typically, such cells have a 10mm (1 cm) pathlength size to fit most instruments that use rectangular cells.

In vertical light beam spectroscopy, a number of diagnostic assays are typically carried out in equipment using multiwcll plastic plates and equipment in which a vertical beam of light is used in making spectrophotometric readings in the individual wells of the plates. These plates generally have several common features, namely, plastic wells with optically transparent bottoms are isolated from one another with respect to liquid contained therein, but physically connected in a precise geometric pattern. The wells are typically part of a plastic carrier plate, and the automated equipment is designed to have a movable stage into which one or more multiwell plates precisely fit. Most commonly these multiwell plates contain 96 wells arranged in an 8 times 12 pattern, although plates containing other numbers of wells are also available.

In some instances, however, a user may desire to perform an analysis of a single sample in a vertical light beam spectrophotometer, and thus, a conventional 96, 384, or 1536 multiwell plate may be undesirable; using a multiwell plate for a single or few samples would be wasteful. Similarly, a user may desire to perform an analysis of a number of samples in a vertical light beam spectrophotometer where the number is significantly smaller than the available wells in a typical multiwell plate. One example of the present disclosure provides an adaptor for a vertical light beam spectrophotometer for analyzing samples contained in conventional cuvettes.

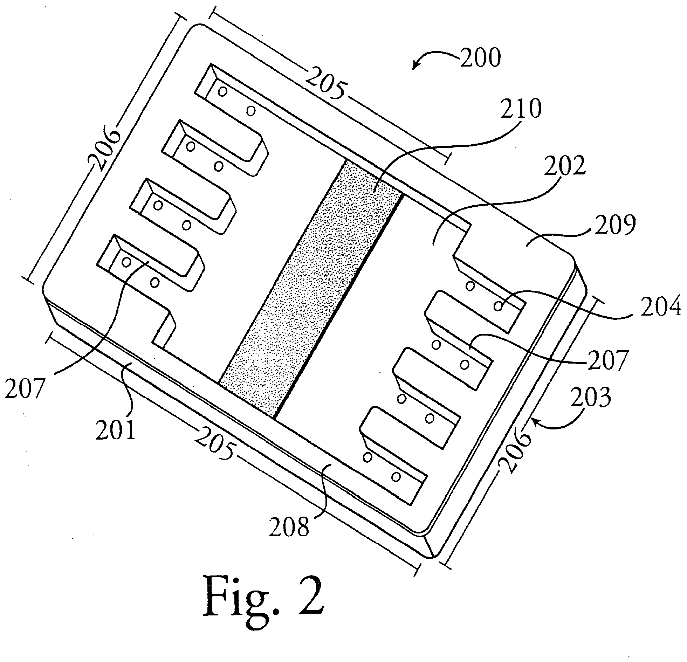

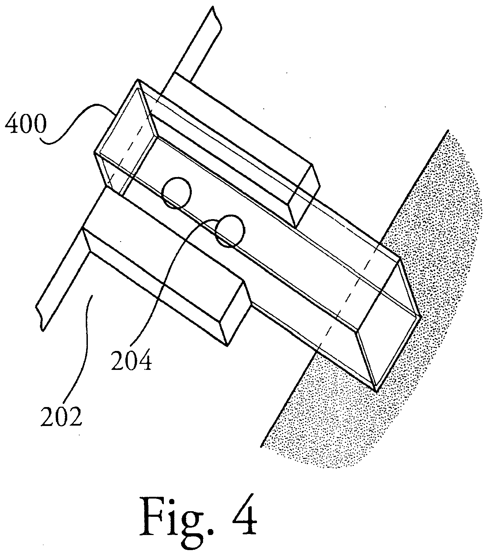

As shown in FIGS. 2, 3, and 4, one example of the present disclosure is an adaptor plate 200 for use in a vertical light beam spectrophotometer suitable for supporting a conventional rectangular cuvette 400 or cuvettes. Adaptor plate 200 includes a an opaque plate 201, forming a base or support for cuvettes. Opaque plate 201 may be constructed of metal, plastic, or any other opaque material known to one skilled in the art. For example, opaque plate 201 may be made of aluminum, steel, or a polymer.

The opaque plate 201 has a top face 202 with a generally planar surface, a bottom face 203 (not shown), and openings 204 for allowing the passage of light through the top face and the bottom face.

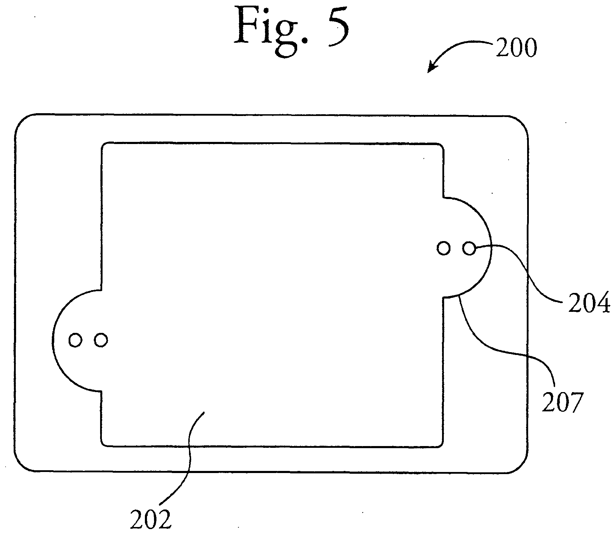

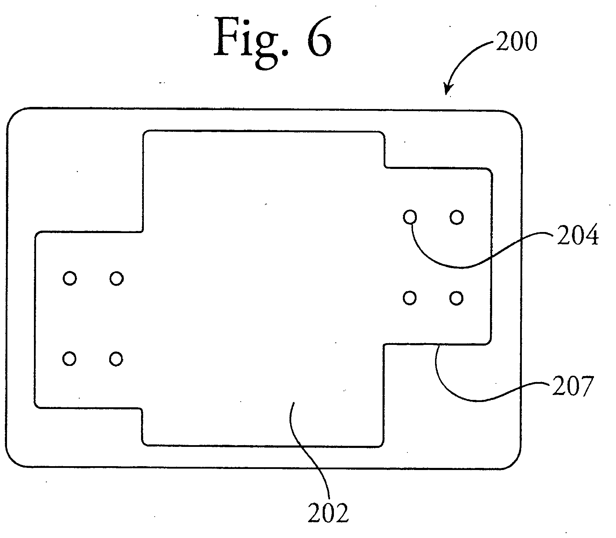

The openings 204 for allowing the passage of light through the top face and the bottom face of opaque plate 201 may disposed on opaque plate 201 in any variety of patterns or configurations known in the art. For example, openings 204 may be disposed in a pattern substantially consistent with any suitable industry standard, such as ANSI SBS 1, 2, 3, or 4-2004, for analyzing rectangular cells. Alternatively, openings 204 may be configured to analyze cylindrical cells as shown in FIG. 5, or wide cells as shown in FIG 6. As will be apparent to one skilled in the art, openings 204 may be disposed in any manner that allows light from to pass through opaque plate 201 and a cuvette containing a sample situated on top of opaque plate 201 to reach a detector.

Adaptor plate 200 may include just one or a number of openings 204 (as shown in FIG. 2). In one example, openings 204 are disposed only in positions which will be aligned with the desired rectangular cuvettes.. In another example, the openings 204 are disposed only near the outer longitudinal 205 and/or latitudinal 206 edges of the opaque plate 201.

The adaptor plate 200 may further include aligning walls 207 for aligning cuvettes disposed on the opaque plate 201. Aligning walls 207 may be used to align or position a cuvette on opaque plate 201. When a cuvette 400 is disposed on the opaque plate 201 between two of the aligning walls 207, the cuvette 400 is generally aligned in a position over at least one of the openings 204.

The distance from a cuvette-facing surface of a first aligning wall 207 to an adjacent cuvette-facing surface of a second aligning wall 207 may be slightly greater than the width of the cuvettes intended to be used with the adaptor plate. It is contemplated that cuvettes can be retained by the aligning walls 207 on adaptor plate 200 during analysis to restrict the cuvettes' movement. Any number aligning walls 207 can be disposed between multiple cuvettes.

Each aligning wall 207 may be disposed on adaptor plate 200 individually. Alternatively, each aligning wall may be a surface of top face 202 situated above or below the top face 200's generally planar surface (*e.g.,* in the form of ridges, rises, or depressions). Aligning walls 207 may further take any shape or be any length sufficient to: (a) align a cuvette over an opening 204; and/or (b) restrict the movement of a cuvette on the opaque plate 201 during handling or analysis.

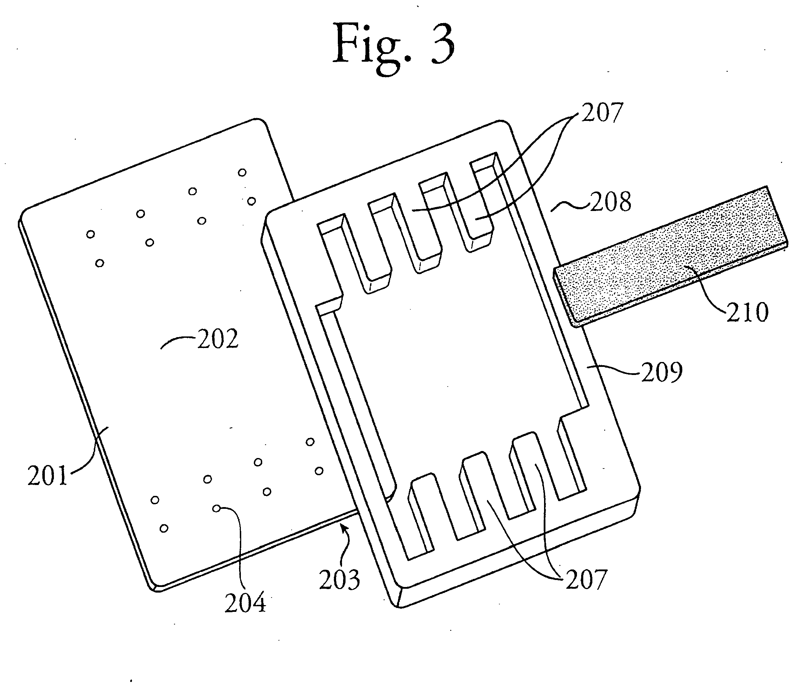

Alternatively, aligning walls 207 may be formed as part of a top plate 208, (or, *e.g*., a layer or sheet), as shown in FIGS. 2 and 3. In the example shown in FIGS. 2 and 3, top plate 208 includes multiple aligning walls 207 represented as "finger" or "teeth" extending from a common border 209. Top plate 208 may fabricated out of any suitable material known in the art, *e.g.*, a polymer, polypropylene, etc. Top plate 208 may be aligned over or connected to opaque plate 201 by any means known in the art, *e.g.,* glue.

The top face 202 of opaque plate 201 may further include a raised element 210 for propping an end of a cuvette in a direction vertical to the planar surface of the top face 202. As shown in FIGS. 2 - 4, this raised element 210 for propping an end of a cuvette may be, for example, disposed near the mid-point of the longitudinal axis on the opaque plate 201, and in a direction generally parallel to the latitudinal edge 206 of the opaque plate 201. However, it will be apparent to one skilled in the art that the raised element 210 may be disposed any place on the top face 202 such that at least one end of a cuvette can be positioned on the raised element 210 to achieve a vertical clearance from the planar surface of the top face 202 relative to the opposite end of the cuvette. It should also be apparent to one skilled in the art that the raised element 210 may be disposed in any position on top face 202 to prop one end of a cuvette, e.g., the upper portion of a cuvette, such that the one end of the cuvette achieves a vertical tilt. The vertical tilt of the cuvette may be desirable to direct any gas bubbles toward the vertically titled end and away from a sample aligned over an opening 204.

Raised element 210 may be constructed of any material sufficient for the purpose of propping an end of a cuvette in a direction vertical to the planar surface of top face 202. For example, raised element 210 may be tape, as shown in FIGS. 2 - 4, disposed on top of top face 202. Alternatively, raised element 210 may be an integral, raised portion of the surface of top face 202. Additionally, raised element 210 may be any material operable to tilt up and, optionally, removably affix a cuvette. It should further be apparent that the top face 202 can include two or more separate raised elements 210 for propping multiple cuvettes. For example, top face 202 may include a separately raised element 210 for each of multiple cuvettes.

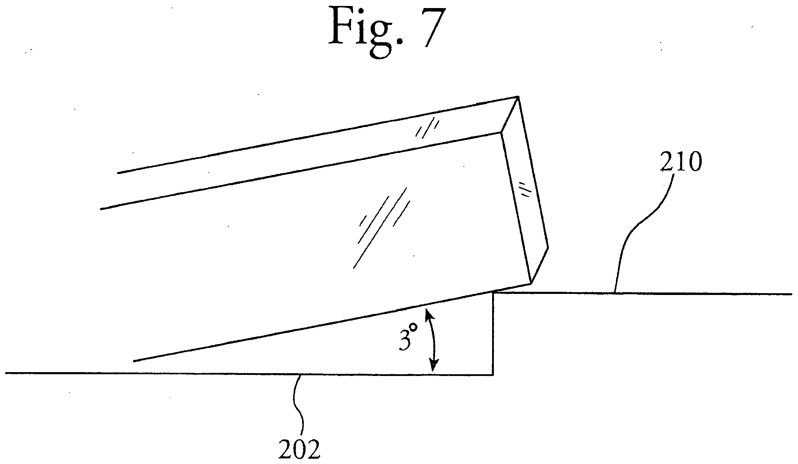

In one example the height of the raised element 210 is sufficient to achieve a tilt of the cuvette as discussed above. For example, the raised element 210 may rise to a height of about 0.5 to 2mm above the planar surface of the top face 202. Similarly, the raised element 210 has a height sufficient to prop the end of a cuvette in a direction between 1 and 4 degrees vertical to the generally planar surface of the top face 202, as shown in FIG. 7. The upper limit on the degree of tilt is constrained by the geometry of the sample area in the vertical light beam spectrometer being used.

The adaptor plate 100 may constructed in various ways known to those skilled in the art. In one example, opaque plate 201 (having top face 202, bottom face 203, and openings 204) and raised element 210 are a one-piece, unitary construction. Such a unitary construction may be made by, for example, molded plastic or other method. In another example, opaque plate 201 (having top face 202, bottom face 203, and openings 204) and raised element 210 are two separate pieces aligned and/or joined together as described above. In a further example, opaque plate 201 (having top face 202, bottom face 203. and openings 204), raised element 210, and aligning walls 207 are made of a one-piece, unitary construction. In an even further example, opaque plate 201, raised element 210, and aligning walls 207 are three separate pieces aligned and/or joined together. Other combinations are also contemplated. For example, opaque plate 201 and raised element 210 may be a one-piece, unitary construction used in conjunction with to a separate top plate including aligning walls 207. Alternatively, opaque plate 201 and aligning walls 207 may be a one-piece, unitary construction used in conjunction with a separate raised element 210.

In a further example, a method for using the adaptor plate described above in a vertical light beam spectrophotometer is contemplated. A user may provide an adaptor plate having any of the configurations discussed above. For example, the adaptor plate may have: a generally rectangular opaque plate including one or more openings for allowing the passage of light through the opaque plate; a raised element for propping one end of a cuvette in a vertical direction relative to the opposite end of the cuvette; and aligning walls for aligning or restricting the movement of a cuvette. The user may align a cuvette having upper and lower portions and a sample to be measured between two aligning walls on the adaptor plate. In particular, the user may further align the cuvette over one or more of the openings for allowing the passage of light through the opaque plate, such that the sample to be measured is disposed in a light path through the opaque plate. The user may then position one end of the cuvette on or in contact with the raised element to prop the end of the cuvette in a vertical direction relative to the opposite end of the cuvette. In one example, the vertical clearance between the end of the cuvette and the generally planar surface of the opaque plate is about 3 degrees, plus or minus one degree. The user may then operate the vertical light beam spectrophotometer to transmit light through the cuvette, sample, and opening in the opaque plate to obtain a reading with respect to the sample. The technique described above may be used in, for example, absorption spectroscopy and fluorescence spectroscopy.

A user may provide a cuvette having a reference sample (*i.e*., a blank, or a cuvette containing a reference sample as discussed above) with a first end and a second end opposite the first end on an adaptor plate having: (a) a top face, (b) a bottom face, and (c) one or more openings for passage of light through the plate. The first end of the cuvette may be propped in a vertical direction relative to the opposite end of the cuvette. The user may also align the cuvette over the one or more openings, such that light passes through the cuvette. Using the vertical light beam spectrophotometer, the user then obtains a reading or measurement. The user then determines whether the vertical light beam spectrophotometer is performing within acceptable tolerance limits by, for example, comparing the reading with the reference sample's known measurement value. Typically, if the reading does not deviate from the reference sample's known measurement value (or does not deviate outside of an acceptable percentage or tolerance), the user determines that the vertical light beam spectrophotometer is performing within acceptable tolerance limits. If the reading significantly deviates from the reference sample's known measurement (*i.e*., beyond or outside of the acceptable tolerance limit), the user determines that the vertical light beam spectrophotometer is not performing within acceptable tolerance limits.

While the invention has been described with reference to particular embodiments, it will be understood by those skilled in the art that various changes may be made and equivalents may be substituted for elements thereof without departing from the scope of the invention. In addition, many modifications may be made to adapt a particular situation or material to the teachings of the invention without departing from the scope of the invention. Therefore, it is intended that the invention not be limited to the particular embodiments disclosed as the best mode contemplated for carrying out this invention, but that the invention will include all embodiments falling within the scope of the appended claims.

## Claims

1. A method of validating a vertical light beam spectrophotometer, the method comprising the steps of:
providing at least one conventional cuvette with a first end and a second end opposite the first end and, which conventional cuvette is adapted to contain a reference sample,
providing: an adaptor plate which comprises: a generally rectangular plate (200) having one or more openings (204) for passage of light through the plate (200), a means for propping an end of the at least one conventional cuvette (100, 400) in a vertical direction relative to the opposite end of the conventional cuvette (100, 400), and a means for aligning (207) the conventional cuvette over the one or more openings (207), wherein the adaptor plate has a top face (202), a bottom face (203) and one or more openings for passage of light through the plate, and wherein the means for propping are provided on or in at least a portion of the top face (202) which is thereby configured such that an end of the at least one conventional cuvette (100, 400) is propped in a vertical direction relative to an opposite end of the conventional cuvette(100, 400);
aligning the conventional cuvette(100, 400) over the one or more openings (204), such that light passes through the conventional cuvette (100, 400);
operating the vertical light beam spectrophotometer to obtain a reading for a reference sample in the conventional cuvette(100, 400), and determining whether the vertical light beam spectrophotometer is performed within acceptable tolerance limits by comparing the reading with the reference sample's known measurement value.

2. A method according to claim 1, wherein the generally rectangular plate (200) is opaque (201).

3. A method according to claim 1, wherein at least a portion of the top (202) face is an inclined surface.

4. A method according to claim1, wherein the means for propping an end of at least one conventional cuvette in a vertical direction relative to the opposite end of the conventional cuvette (100, 400) is included in the top face (202) and the means for propping an end of at least one conventional cuvette in a vertical direction relative to the opposite end of the conventional cuvette (100, 400) is a raised element (210).

5. An method according to claim 4, wherein the top face (202) includes two or more raised elements (210) for propping ends of two or more conventional cuvettes (100, 400).

6. A method according to claim 4, wherein the raised element (210) is removable.

7. A method according to any one of the preceding claims, wherein the aligning means for aligning the conventional cuvette over the one or more openings (207) is one or more aligning walls (207) for aligning one or more surfaces of a conventional cuvette disposed on the top face.

8. A method according to claims 2 to 7, further including a top plate (208), joinable to the top face (202) wherein the top plate (208) has one or more openings alignable with the one or more openings (204) of the plate and the top plate (208) has portions configured to align at least one conventional cuvette over the one or more openings (204) of the plate.

9. A method according to any one of the preceding claims, wherein the one or more openings for allowing the passage of light through the plate (204) are disposed in a pattern substantially consistent with any of ANSI SBS 1, 2, 3, 4-2004 standards for vertical light beam spectrophotometers.

10. A method according to any one of the preceding claims, wherein the plate (200) further includes a longitudinal edge (205) and a latitudinal edge (206) and the raised element (210) is disposed on the plate (200, 201) in a direction generally parallel to the latitudinal edge (206) of the plate.

11. A method according to claim 4, wherein the top face (202) has a generally planar surface and the raised element (210) has a height of about 0.5 to 2mm above the generally planar surface of the top face (202).

12. A method according to claim 8, further comprising at least two aligning walls (207), wherein the distance from an outer surface of a first aligning wall (207) to an outer surface of a second aligning wall (207) is approximately equal to or greater than the width of the conventional cuvette (100, 400).

13. A method according to any one of the preceding claims, wherein the adaptor is made of a one-piece, unitary construction.

14. A method according to any one of the preceding claims, wherein the means for propping an end of the at least one conventional cuvette in a vertical direction relative to the opposite end of the conventional cuvette (100, 400) is operable to prop the end of the conventional cuvette 1 to 4 degrees relative to the opposite end of the conventional cuvette(100, 400).

## Patentansprüche

1. Verfahren zur Validierung eines Spektrofotometers mit vertikalem Lichtstrahl, umfassend die folgenden Schritte:
die Bereitstellung von mindestens einer herkömmlichen Küvette mit einem ersten Ende und einem zweiten, dem ersten Ende gegenüber angeordneten Ende, die zum Enthalten einer Vergleichsprobe ausgelegt ist;
die Bereitstellung einer Adapterplatte, bestehend aus einer im Allgemeinen rechteckigen Platte (200) mit einer Öffnung oder mehreren Öffnungen (204) zum Durchgang von Licht durch die Platte (200), einem Mittel zum Anheben eines Endes der mindestens einen herkömmlichen Küvette (100, 400) in einer vertikalen Richtung im Verhältnis zum gegenüber liegenden Ende der herkömmlichen Küvette (100, 400), und einem Mittel zum Ausrichten (207) der Küvette über der einen Öffnung oder den mehreren Öffnungen (207), wobei die Adapterplatte eine Oberseite (202), eine Unterseite (203) und eine Öffnung oder mehrere Öffnungen zum Durchgang von Licht durch die Platte aufweist und wobei das Mittel zum Anheben an oder in mindestens einem Abschnitt der Oberseite (202) vorgesehen ist, die daher so ausgelegt ist, dass ein Ende der mindestens einen herkömmlichen Küvette (100, 400) in einer vertikalen Richtung im Verhältnis zum gegenüber liegenden Ende der herkömmlichen Küvette (100, 400) angehoben wird;
das Ausrichten der herkömmlichen Küvette (100, 400) über der einen Öffnung oder den mehreren Öffnungen (204), so dass Licht durch die herkömmliche Küvette (100, 400) hindurchtritt;
den Betrieb des Spektrofotometers mit vertikalem Lichtstrahl zur Erhaltung eines Messwerts für eine Vergleichsprobe in der herkömmlichen Küvette (100, 400) und die Ermittlung, ob das Spektrofotometer mit vertikalem Lichtstrahl innerhalb von annehmbaren Toleranzgrenzen funktioniert, durch Vergleichen des Messwerts mit dem bekannten Messwert der Vergleichsprobe.

2. Verfahren nach Anspruch 1, wobei die im Allgemeinen rechteckige Platte (200) lichtundurchlässig (201) ist.

3. Verfahren nach Anspruch 1, wobei mindestens ein Abschnitt der Oberseite (202) eine Schrägfläche ist.

4. Verfahren nach Anspruch 1, wobei wobei das Mittel zum Anheben eines Endes der mindestens einen herkömmlichen Küvette in einer vertikalen Richtung im Verhältnis zum gegenüber liegenden Ende der herkömmlichen Küvette (100, 400) in der Oberseite (202) vorgesehen ist und das Mittel zum Anheben eines Endes der mindestens einen herkömmlichen Küvette in einer vertikalen Richtung im Verhältnis zum gegenüber liegenden Ende der herkömmlichen Küvette (100, 400) ein erhabenes Element (210) ist.

5. Verfahren nach Anspruch 4, wobei die Oberseite (202) zwei oder mehr erhabene Elemente (210) zum Anheben von Enden von zwei oder mehr herkömmlichen Küvetten (100, 400) beinhaltet.

6. Verfahren nach Anspruch 4, wobei das erhabene Element (210) abnehmbar ist.

7. Verfahren nach einem der vorhergehenden Ansprüche, wobei das Mittel zum Ausrichten der herkömmlichen Küvette über der einen Öffnung oder den mehreren Öffnungen (207) eine Ausrichtwand oder mehrere Ausrichtwände (207) zum Ausrichten von einer Oberfläche oder mehreren Oberflächen einer auf der Oberseite angeordneten herkömmlichen Küvette ist.

8. Verfahren nach einem der Ansprüche 2 bis 7, weiter umfassend eine mit der Oberseite (202) verbindbare Deckplatte (208), wobei die Deckplatte (208) eine Öffnung oder mehrere Öffnungen aufweist, die nach der einen Öffnung oder den mehreren Öffnungen (204) der Platte ausgerichtet werden kann/können, und wobei die Deckplatte (208) Abschnitte aufweist, die zum Ausrichten von mindestens einer herkömmlichen Küvette über der einen Öffnung oder den mehreren Öffnungen (204) der Platte ausgelegt sind.

9. Verfahren nach einem der vorhergehenden Ansprüche, wobei die eine Öffnung oder die mehreren Öffnungen zum Durchgang von Licht durch die Platte (204) in einem Muster angeordnet ist/sind, das im Wesentlichen den Normen ANSI SBS 1, 2, 3, 4-2004 für Spektrofotometer mit vertikalem Lichtstrahl entspricht.

10. Verfahren nach einem der vorhergehenden Ansprüche, wobei die Platte (200) weiter eine Längskante (205) und eine Querkante (206) auf weist und wobei das erhabene Element (210) in einer Richtung auf der Platte (200, 201) angeordnet ist, die im Allgemeinen parallel zur Querkante (206) der Platte verläuft.

11. Verfahren nach Anspruch 4, wobei die Oberseite (202) eine im Allgemeinen ebene Oberfläche hat und das erhabene Element (210) die im Allgemeinen ebene Oberfläche der Oberseite (202) um ca. 0,5 mm bis 2 mm überragt.

12. Verfahren nach Anspruch 8, weiter umfassend mindestens zwei Ausrichtwände (207), wobei der Abstand von einer Außenfläche einer ersten Ausrichtwand (207) zu einer Außenfläche einer zweiten Ausrichtwand (207) ungefähr der Breite der herkömmlichen Küvette (100, 400) gleich oder größer als diese ist.

13. Verfahren nach einem der vorhergehenden Ansprüche, wobei der Adapter als einstückiger, selbsttragender Aufbau ausgeführt ist.

14. Verfahren nach einem der vorhergehenden Ansprüche, wobei das Mittel zum Anheben eines Endes der mindestens einen herkömmlichen Küvette in einer vertikalen Richtung im Verhältnis zum gegenüber liegenden Ende der herkömmlichen Küvette (100, 400) zum Anheben des Endes der herkömmlichen Küvette um 1 bis 4 Grad im Verhältnis zum gegenüber liegenden Ende der herkömmlichen Küvette (100, 400) betätigt werden kann.

## Revendications

1. Procédé de validation d'un spectrophotomètre à faisceau lumineux vertical, le procédé comprenant les étapes consistant à :
fournir au moins une cuvette conventionnelle avec une première extrémité et une seconde extrémité opposée à la première extrémité, et laquelle cuvette conventionnelle est adaptée à contenir un échantillon de référence,
fournir : une plaque d'adaptateur qui comprend : une plaque généralement rectangulaire (200) ayant une ou plusieurs ouvertures (204) pour le passage de lumière à travers la plaque (200), un moyen pour étayer une extrémité de l'au moins une cuvette conventionnelle (100, 400) dans une direction verticale par rapport à l'extrémité opposée de la cuvette conventionnelle (100, 400), et un moyen pour aligner (207) la cuvette conventionnelle sur la ou les ouvertures (207), dans lequel la plaque d'adaptateur a une face supérieure (202), une face inférieure (203) et une ou plusieurs ouvertures pour le passage de lumière à travers la plaque, et dans lequel le moyen pour étayer est prévu sur ou dans au moins une portion de la face supérieure (202) qui est de ce fait configurée de sorte qu'une extrémité de l'au moins une cuvette conventionnelle (100, 400) est étayée dans une direction verticale par rapport à une extrémité opposée de la cuvette conventionnelle (100, 400) ;
aligner la cuvette conventionnelle (100, 400) sur la ou les ouvertures (204) de sorte que de la lumière passe à travers la cuvette conventionnelle (100, 400) ;
opérer le spectrophotomètre à faisceau lumineux vertical pour obtenir une lecture pour un échantillon de référence dans la cuvette conventionnelle (100, 400) et déterminer si le spectrophotomètre à faisceau lumineux vertical est réalisé au sein de limites de tolérance acceptables en comparant la lecture à la valeur de mesure connue de l'échantillon de référence.

2. Procédé selon la revendication 1, dans lequel la plaque généralement rectangulaire (200) est opaque (201).

3. Procédé selon la revendication 1, dans lequel au moins une portion de la face supérieure (202) est une surface inclinée.

4. Procédé selon la revendication 1, dans lequel le moyen pour étayer une extrémité d'au moins une cuvette conventionnelle dans une direction verticale par rapport à l'extrémité opposée de la cuvette conventionnelle (100, 400) est inclus dans la face supérieure (202) et le moyen pour étayer une extrémité d'au moins une cuvette conventionnelle dans une direction verticale par rapport à l'extrémité opposée de la cuvette conventionnelle (100, 400) est un élément surélevé (210).

5. Procédé selon la revendication 4, dans lequel la face supérieure (202) inclut deux éléments surélevés (210) ou plus pour étayer des extrémités de deux cuvettes conventionnelles (100, 400) ou plus.

6. Procédé selon la revendication 4, dans lequel l'élément surélevé (210) est amovible.

7. Procédé selon l'une quelconque des revendications précédentes, dans lequel le moyen d'alignement pour aligner la cuvette conventionnelle sur la ou les ouvertures (207) est une ou plusieurs parois d'alignement (207) pour aligner une ou plusieurs surfaces d'une cuvette conventionnelle disposée sur la face supérieure.

8. Procédé selon les revendications 2 à 7, incluant en outre une plaque supérieure (208) pouvant être reliée à la face supérieure (202), dans lequel la plaque supérieure (208) a une ou plusieurs ouvertures pouvant être alignées avec la ou les ouvertures (204) de la plaque et la plaque supérieure (208) a des portions configurées pour aligner au moins une cuvette conventionnelle sur la ou les ouvertures (204) de la plaque.

9. Procédé selon l'une quelconque des revendications précédentes, dans lequel la ou les ouvertures pour permettre le passage de lumière à travers la plaque (204) sont disposées en un motif essentiellement concordant avec l'une quelconque des normes ANSI SBS 1, 2, 3, 4-2004 pour spectrophotomètres à faisceau lumineux vertical.

10. Procédé selon l'une quelconque des revendications précédentes, dans lequel la plaque (200) inclut en outre un bord longitudinal (205) et un bord latitudinal (206), et l'élément surélevé (210) est disposé sur la plaque (200, 201) dans une direction généralement parallèle au bord latitudinal (206) de la plaque.

11. Procédé selon la revendication 4, dans lequel la face supérieure (202) a une surface généralement plane et l'élément surélevé (210) a une hauteur d'environ 0,5 à 2 mm au-dessus de la surface générale plane de la face supérieure (202).

12. Procédé selon la revendication 8, comprenant en outre au moins deux parois d'alignement (207), dans lequel la distance d'une surface externe d'une première paroi d'alignement (207) à une surface externe d'une seconde paroi d'alignement (207) est approximativement supérieure ou égale à la largeur de la cuvette conventionnelle (100, 400).

13. Procédé selon l'une quelconque des revendications précédentes, dans lequel l'adaptateur est réalisé en une construction unitaire d'une pièce.

14. Procédé selon l'une quelconque des revendications précédentes, dans lequel le moyen pour étayer une extrémité de l'au moins une cuvette conventionnelle dans une direction verticale par rapport à l'extrémité opposée de la cuvette conventionnelle (100, 400) peut être opéré pour étayer l'extrémité de la cuvette conventionnelle de 1 à 4 degrés par rapport à l'extrémité opposée de la cuvette conventionnelle (100, 400).
